# EUROPEAN PATENT SPECIFICATION

(11) **EP 2 914 457 B1**
(45) Date of publication and mention of the grant of the patent: **04.01.2017**
(21) Application number: 13798759.0
(22) Date of filing: 30.10.2013
(51) Int. Cl.: B60N 3/02

(54) **HANDLE AND METHOD FOR MAKING THE SAME**
GRIFF SOWIE VERFAHREN ZU SEINER HERSTELLUNG
POIGNÉE ET PROCÉDÉ DE FABRICATION DE CELLE-CI

(30) Priority: 30.10.2012 IN DE33482012
(43) Date of publication of application: 09.09.2015
(73) Proprietor: SABIC Global Technologies B.V., 4612 PX Bergen op Zoom (NL)
(72) Inventor: SINGH, Yugandhara, Bangalore, Karnataka 560066 (IN); TIWARI, Anil, Bangalore, Karnataka 560066 (IN); SHARMA, Harindranath, Bangalore, Karnataka 560066 (IN); NARAYANASWAMY, Venkatesha, Bangalore , Karnataka 560066 (IN)
(74) Representative: Balder IP Law, S.L.
(86) International application number: PCT/IB2013/059800
(87) International publication number: WO 2014/068505

(56) References cited:
- WO-A1-2008/109791
- WO-A2-2009/041768
- CN-A- 101 380 912
- CN-U- 201 881 944
- JP-A- S5 733 034
- KR-A- 20100 057 175

## Description

### TECHNICAL FIELD

Disclosed herein are handles, specifically, multiple user handles, methods for making the handles, and uses of the handles, in particular a handle according to the preamble of claim 1 (CN 101 380 912 A).

### BACKGROUND

Commuter vehicles (e.g., trains, buses, etc.) often contain a limited number of seats for passengers, meaning that some passengers on the commuter vehicle will have to stand. To be able to stand without falling or leaning into another passenger when the commuter vehicle is moving or when the commuter vehicle starts or stops, passengers often hold onto a grab handle suspended from above. Since the grab handles are designed to be used by one user at a time, it limits the number of passengers holding the grab handle simultaneously. They may also not be structurally sufficient for greater than one user to hold onto. If more than one user holds onto the grab handle, the handle can break or the user's hands can touch, increasing the possibility of spreading germs, illnesses, etc. Furthermore, grab handles intended for use by a single user, also do not solve the problem of allowing a greater number of people on the commuter vehicle at the same time, since the number of seats and number of grab handles effectively limits the number of people that can safely be on the commuter vehicle at the same time.

Thus, there is a need for handles in which multiple users can hold onto the same handle, e.g., when on a commuter vehicle.

### SUMMARY

Disclosed, in various embodiments, are handles and methods for making and using the same.

In an embodiment, a handle comprises: a neck; and a body portion extending from the neck, wherein the body portion comprises a corner portion extending from the neck, an arm extending from the corner portion, and greater than or equal to two hold portions extending from the arm, wherein the neck further comprises a fillet near the corner portion, wherein the fillet comprises a greater diameter than the neck and/or wherein the neck further comprises alternating ribs extending radially inward from an inner wall of a first neck portion and indentations forming a portion of the inner wall.

In an embodiment, a method of making a handle comprises: melting a polymer to form a melt; injecting the polymer into a cavity to form a handle comprising a neck; and a body portion extending from the neck, wherein the body portion comprises a comer portion extending from the neck, an arm extending from the comer portion, and greater than or equal to two hold portions extending from the arm wherein the neck further comprises a fillet near the corner portion, wherein the fillet comprises a greater diameter than the neck and/or wherein the neck further comprises alternating ribs extending radially inward from an inner wall of a first neck portion and indentations forming a portion of the inner wall;injecting nitrogen gas into the melt through a gas injection pin as the melt begins to solidify;pushing the melt to the extremities of the cavity;cooling the melt;venting the nitrogen gas;opening the mold; and ejecting the handle.

These and other features and characteristics are more particularly described below.

### BRIEF DESCRIPTION OF THE DRAWINGS

The following is a brief description of the drawings wherein like elements are numbered alike and which are presented for the purposes of illustrating the exemplary embodiments disclosed herein and not for the purposes of limiting the same.
FIG. 1 is an isometric view of a handle.
FIG. 2 is an isometric top view of the handle of FIG. 1.
FIG. 3 is another isometric view of the handle of FIG. 1.
FIG. 4 is a side view of the handle of FIG. 1.
FIG. 5 is a detailed view of a portion of the handle of FIG. 1.
FIG. 6 is a cross-sectional view taken along line A-A in FIG. 5.
FIG. 7 is a top view of a portion of the handle of FIG. 1.
FIG. 8 is an isometric view of a handle.
FIG. 9 is an isometric view of another handle.
FIG. 10 is an isometric view of another handle.
FIG. 11 is an isometric view of another handle.
FIG. 12 is an isometric view of another handle.
FIG. 13 is an isometric view of another handle.
FIG. 14 is an isometric view of another handle.
FIG. 15 is a bottom view of the handle of FIG. 14.
FIG. 16 is a top view of the handle of FIG. 14.
FIG. 17 is a schematic view of an attachment mechanism.
FIG. 18 is another schematic view of the attachment mechanism of FIG. 17.
FIG. 19 is an isometric view of the attachment mechanism of FIG. 17 and the handle of FIG. 15.
FIG. 20 is an isometric view of the handle of FIG. 1 attached to another attachment mechanism.
FIG. 21 is a schematic view of the attachment mechanism of FIG. 20.
FIG. 22 is another schematic view of the attachment mechanism of FIG. 20.
FIG. 23 is an isometric view of an attachment mechanism attached to the handle of FIG. 15.
FIG. 24 is a cross-sectional view of the attachment mechanism of FIG. 23.
FIG. 25 is a schematic view of the attachment mechanism of FIG. 23.
FIG. 26 is a front view of the handle of FIG. 15 attached to an attachment mechanism.
FIG. 27 is a cross-sectional view of the handle and attachment mechanism of FIG. 26.
FIG. 28 is an isometric view of the handle of FIG. 1 processed via a gas assisted injection molding process.
FIG. 29 is a view of the loads applied during simulations of a handle having the design of FIG. 9.
FIG. 30 is a view of the loads applied during simulations of a handle having the design of FIG. 9.
FIG. 31 is a view of the loads applied during simulations of a handle having the design of FIG. 9.
FIG. 32 is a view of the loads applied during simulations of a handle having the design of FIG 10.
FIG. 33 is a view of the loads applied during simulations of a handle having the design of FIG. 10.
FIG. 34 is a view of the loads applied during simulations of a handle having the design of FIG. 13.
FIG. 35 is a view of the loads applied during simulations of a handle having the design of FIG. 13.
FIG. 36 is a view of the loads applied during simulations of a handle having the design of FIG. 1.
FIG. 37 is a view of a handle without a protuberance.

### DETAILED DESCRIPTION

Disclosed herein are handles (also referred to as grab handles) that can be used in commuter vehicles (e.g., trains, busses, etc.) by greater than or equal to one user simultaneously so that passengers can safely stand in a commuter vehicle when no seats are available. The handles can comprise any material that will provide the desired strength to the handle such that they do not fail when force is applied by multiple passengers, where failure can include cracking of the structure, breaking, etc. For example, the handles can comprise a polymer material and/or a metal. An example of a polymer material includes polycarbonate and polyetherimide, while that of a metal includes steel.

The handles disclosed herein desirably should not experience stresses greater than the yield strength of the material from which it is made when a force is applied, and hence, the material should be chosen to meet the anticipated stress that will be applied to the handle. For example, if the handle comprises a material (e.g., polycarbonate) having a yield strength of 60 MegaPascals (MPa), the handle should not experience stresses greater than 60 MPa when a force is applied or failure (e.g., breakage, permanent deformation) can occur. Generally, the force applied to specific portions of the handles can be greater than or equal to 50 kilograms (kg), specifically, greater than or equal to 100 kg, and more specifically, greater than or equal to 200 kg (generally, the weight a user applies to the handle when holding).

The handles disclosed herein can generally comprise a neck connected to a body portion, where the body portion comprises arms and hold portions extending from a diverging portion. The neck can optionally comprise a protuberance (i.e., a portion thicker than the overall diameter of the neck and arms) to help provide further strength and rigidity to the handle. The hold portions can vary in length to accommodate users of different heights. Although described herein with respect to commuter vehicles, it is to be understood that the handles disclosed herein as applicable to other areas as well, including the use of the handles to pull a load with both hands (e.g., with the handles attached to a load and the user pulling on the handle); the handles could be suspended from a climbing mechanism (e.g., ladder, crane, etc.) and the user can utilize the handle for stability.

A base portion on the body portion can comprise an optional indentation, which can allow advertisements, notices, or other desired features to be inserted onto the handle. The handles can comprise any desired color, e.g., the color of the handles can be chosen to match or mirror the interior components of a railway car, can be chosen to be a different color in order to be easily visible to passengers, and/or can be chosen to provide user information (e.g., a particular color can indicate if the handle is intended for use of a child or adult, or for use based upon the weight of the user (up to a specified weight limit), and so forth). Some possible colors include red, blue, green, yellow, white, black, etc.

An inner surface of the hold portions can further optionally comprise texturing to allow a user to more easily grip and hold onto the hold portions. The hold portions can form an optional plateau on the diverging portion of the base portion to help alleviate stress that can accumulate on the diverging portion. The various components of the handle can each, individually, have a width along the widest cross-sectional point that is chosen based upon the amount of stress that will be experienced in that area of the handle. Generally, the can be less than or equal to 35 millimeters (mm), specifically, less than or equal to 30 mm, more specifically, less than or equal to 25 mm, and even more specifically, less than or equal to 20 mm.

The neck (e.g., the portion of the handle that is in direct contact with an attachment mechanism) can optionally comprise a protuberance, which can have a larger diameter than a diameter of the neck, the arm, and/or a corner portion of the base portion. The protuberance can provide extra stiffness to the handle near an optional opening in the neck. The opening can extend through the neck to provide an attachment for an attachment mechanism. The protuberance can have a taper from end to end of the neck providing a smooth surface. Optionally, the protuberance can extend radially from the near the base of the neck, between the corner portions. The neck can further optionally comprise a fillet near the corner portions where the fillet can generally have a greater thickness than the corner portions, hold portions, and neck. The fillet can be designed to blend into the corner portion to achieve a smooth surface. The neck can further optionally comprise rib(s) (e.g., alternating ribs) that can extend outwardly from an inner wall of a first neck portion and indentations that can form part of the inner wall. In other words, the neck can optionally comprise ribs extending radially inward from the wall of the neck into the opening through the neck. The ribs can help provide structural reinforcement (e.g., stiffness) to the neck. A ledge can be present to connect the first neck portion to a second neck portion, wherein the ledge can have a generally flat surface. A bore can extend through the opening where the bore can have a first bore diameter in the second neck portion and a second bore diameter in a third neck portion, where the second bore diameter is larger than the first bore diameter to accommodate a cap for an attachment mechanism being inserted into the bore in the area of the second bore diameter.

It is contemplated that greater than or equal to 2 hold portions can be present on the handle, specifically, greater than or equal to 3, more specifically, greater than or equal to 4, even more specifically, greater than or equal to 5, and still more specifically, greater than or equal to 6 hold portions can be present on the handles. For example, hold portions can extend from the arms or hold portions can be separated by dividers therebetween with optional apertures located between the dividers and the hold portions. It is generally understood that one hold portion corresponds to one user (i.e., passenger). The handles can further optionally comprise an area which can be used for embellishments (e.g., advertisements, notices, decoration, information, etc.).

The handles can attach to the vehicle through an attachment mechanism. The attachment mechanism can comprise a bracket configured to anchor the handle to the vehicle. For example, the bracket can have an opening configured to receive a tube therethrough, wherein the tube is mounted in the vehicle. The attachment mechanism can further comprise a collar, rod, spring, washer, and/or cap combination to attach the handle to the attachment mechanism.

A more complete understanding of the components, processes, and apparatuses disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the exemplary embodiments. Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function. It is further to be understood that any of the elements disclosed with respect to specific figures can be applicable in any of the figures as described herein.

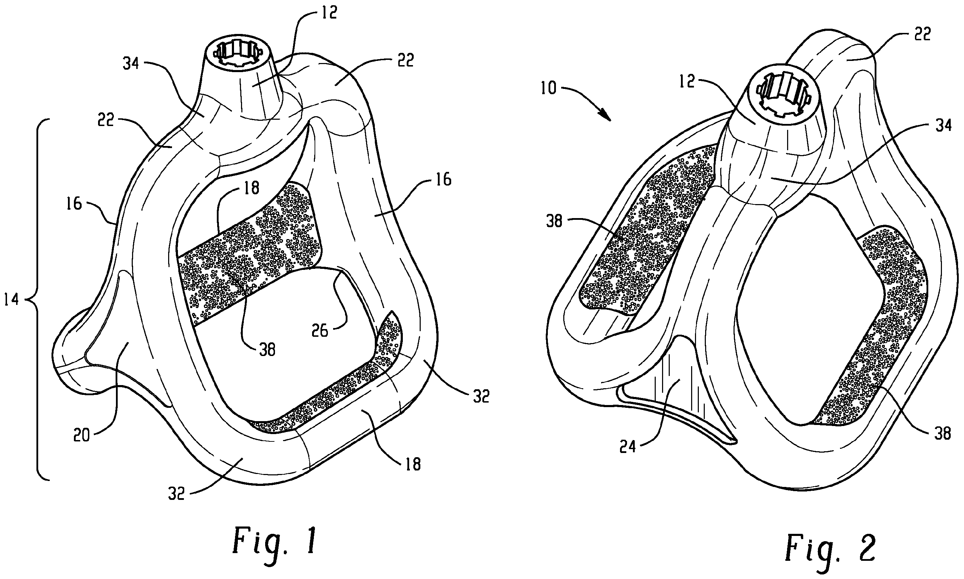

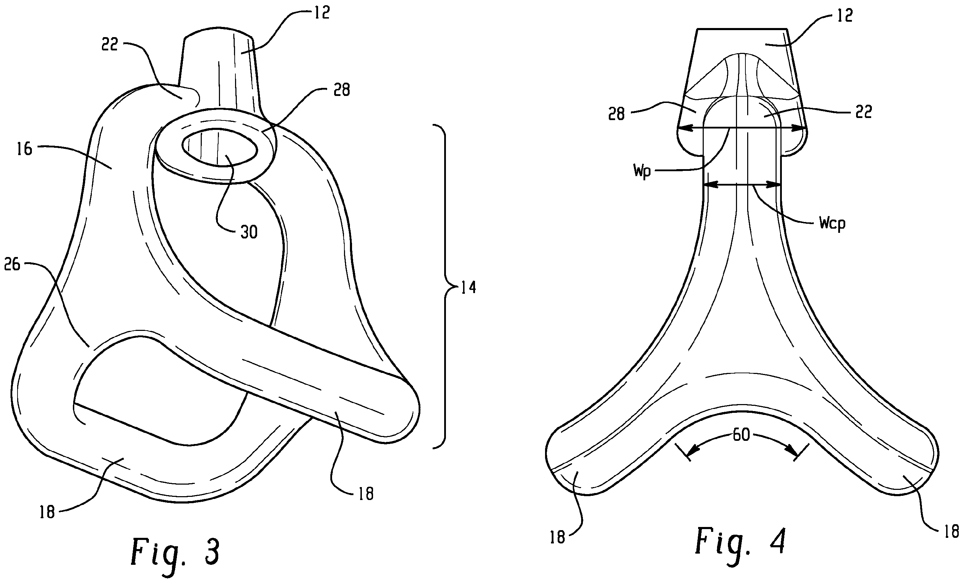

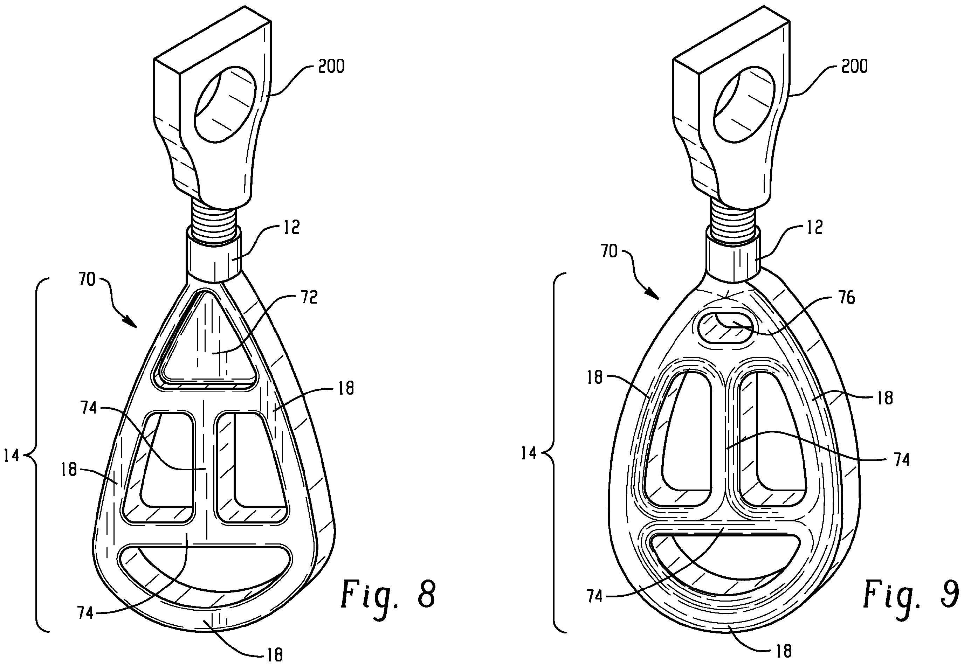

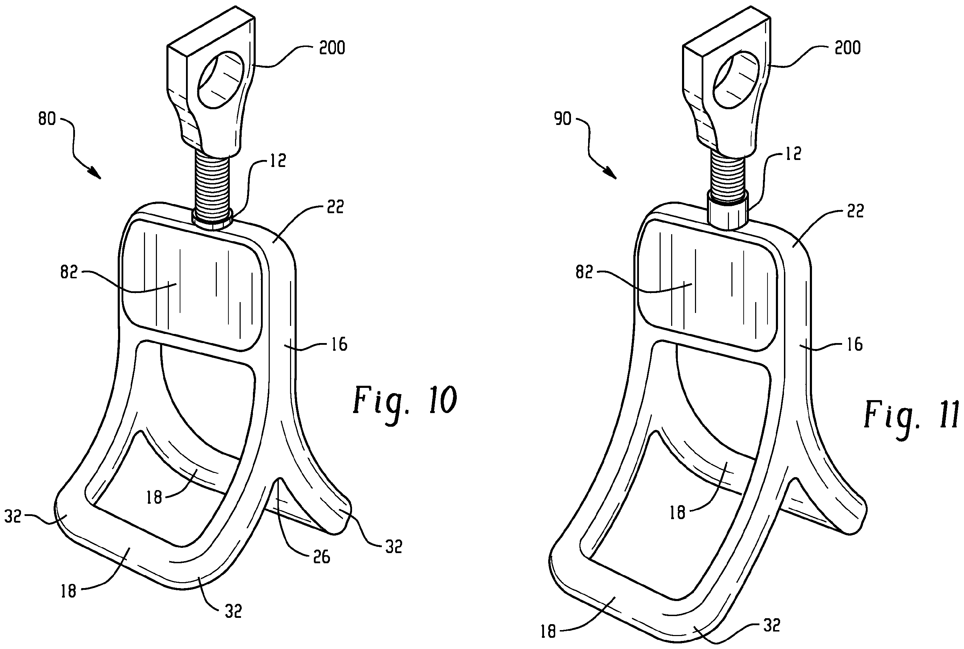

Figures 1 to 7 illustrate a handle 10 where greater than or equal to two users can hold the handle 10 simultaneously (e.g., in the shape of an inverted "y"). For example, the handle 10 can comprise a neck 12 (illustrated as generally circular). Extending from the neck 12 can be a body portion 14, where the body portion 14 can comprise an arm 16 that can diverge into a hold portion(s) 18 (e.g., first hold portion, second hold portion, etc.). The arm 16 can connect to the neck 12 through an optional corner portion 22, e.g., a portion located between the arm and the neck which can optionally be rounded as illustrated. The hold portions 18 can connect to the arm 16 through a corner portion 32. The arm 16 can comprise an area 24 which diverges at an end opposite the corner portion 32 into the hold portion 18. The diverging portion 26 can be flat or rounded (e.g., curved). For example, as illustrated in Figure 4, the diverging portion 26 can comprise a plateau 60, which can provide a greater surface area for the diverging portion 26 so that stresses can be spread out rather than accumulate at a point. It can desirable for the plateau 60 of the diverging portion 26 to have a rounded shape for aesthetic and safety reasons, e.g., since sharp corners may not be desired in a vehicle where users may come into contact with the sharp corners. For example, the radius of the plateau can be less than or equal to 35 mm, specifically, less than or equal to 30 mm, and more specifically, less than or equal to 25 mm. The hold portions 18 can vary in length to accommodate different height users (see e.g., Figure 11). The body portion 14 can also optionally comprise an area (see e.g., center portion 72 in Figure 8 and center portion 82 in Figures 10 and 11), e.g., that can accommodate embellishments (e.g., advertisements, notices, decoration, information, etc.) The embellishments can be attached to the surface of the area and/or formed into the surface. The area 72,82,102,124 can optionally be an indentation 20 The area 24,72,82 can be located anywhere on the handle, e.g., near the top, middle, or bottom. Desirably it is located so as to enhance the structural integrity of the handle in an area of higher stress (as compared to other sections of the handle).

As more fully illustrated in Figures 3 and 4, the neck 12 can comprise a protuberance 28 having a width, Wp, which can be wider than a width, Wcp, of the corner portion 22. The protuberance 28 can provide extra stiffness to the handle 10 around an optional opening 30 in the neck 12 (see Figure 3). The protuberance 28 can taper from one end toward the other end of the neck 12 as seen in Figure 4, e.g., providing a smooth surface to the protuberance 28. Further stiffness of the handle can be achieved with a fillet 34 that can be located on the neck 12 on an end of the corner portion 22 opposite the end of the corner portion 22 next to the arm 16. (See Figure 1) The fillet 34 can generally be thicker than the corner portion 22, but can blend into the corner portion 22 to achieve a smooth surface. The hold portions 18 can optionally include texturing, for example, on an inner surface 38 of the hold portions 18 to provide a gripping surface for the user, so that the user's hand(s) doesn't easily slip from the handle 10. (See Figure 1) Although only shown with respect to Figures 1 to 7, it is to be understood that the neck in each of the handles disclosed herein can comprise a protuberance 28 as described herein.

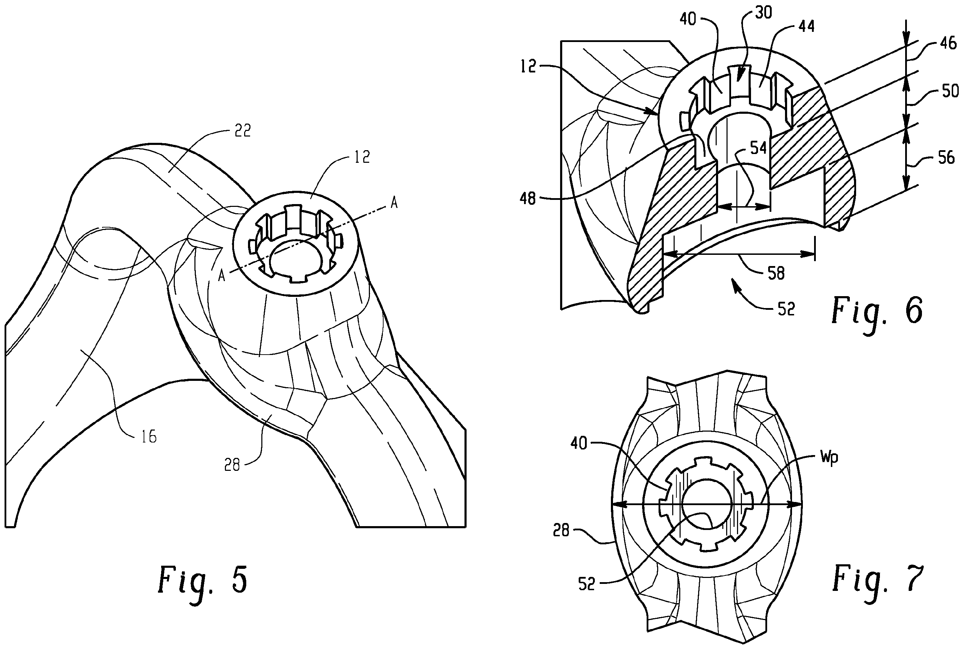

Turning now to Figures 5, 6, and 7, the neck 12 is shown in further detail, where Figure 6 is a cross-sectional view of line A-A in Figure 5. For example, as illustrated in Figures 5, 6, and 7, the neck 12 can comprise alternating ribs 40 that extend radially from an inner wall 44 of a first neck portion 46. The ribs 40 can provide further structural reinforcement (e.g., stiffness) to the neck 12. A ledge 48 can connect the first neck portion 46 to a second neck portion 50, wherein the ledge 48 can have a generally flat surface. A bore 52 can extend through the opening 30 where the bore can have a first bore diameter 54 in the second neck portion 50 and a second bore diameter 58 in a third neck portion 56. The second bore diameter 58 can be greater than the first bore diameter 54 to allow an attachment member (e.g., nut, screw, bolt, etc.) to be inserted through the opening 30 into the third neck portion 56. A corresponding attachment member can be inserted through the opening 30 into the first neck portion 46 and the second neck portion 50. The first bore diameter 54 can be less than the second bore diameter 58 to help restrict excess movement of the handle 10. Although only shown with respect to Figures 1 to 7, it is to be understood that the neck in each of the handles disclosed herein can comprise ribs 40, and/or first neck portion, and/or second neck portion, as described herein.

Figures 8 and 9 demonstrate another handle 70 in which multiple users can simultaneously hold the handle 70. Handle 70 can comprise a neck 12 and a body portion 14 extending from the neck 12. The body portion 14 can diverge from the neck 12 into an area 72 from which hold portions 18 on either side of the body portion 14 and on an end of the body portion 14 opposite the neck 12, can extend. The center portion 72 can comprise any desired shape such as triangular, square, rectangular, hexagonal, etc. The center portion 72 can be solid to provide a flat surface for advertisements, etc. as seen in Figure 8, or the center portion 72 can have an aperture 76 extending through the center portion 72. Divider 74 can be present through the body 14 to divide hold portions 18 into different, separate sections. For example, as illustrated in Figure 8, divider 74 can form an inverted "T", dividing the hold portions 18 into three separate sections.

Figures 10 to 16 illustrate further variations on the handles described herein. For example, Figures 10 and 11 illustrate handles 80, 90 respectively that are similar to the handle 10 described with respect to Figures 1 to 7. The handle 80 of Figure 10 can comprise an inverted "y" shape with an area 82 extending from the neck 12. Handle 80 can have a corner portion 22 on either side of the neck, which extends into arm 16. The corner portion 22 can optionally have rounded corners that can extend into the arm 16 diverging into hold portions 18. The area as illustrated in Figures 10 and 11 can comprise a generally rectangular shape. It is to be understood, however, that the center portion 82 can comprise any desired shape and is not limited to a rectangular shape. Figure 11 illustrates a similar handle 90, except that one hold portion 18 has a shorter length than another hold portion 18. Different length hold portions on the handles can accommodate different height users and/or can decrease the likelihood of one user's hands touching one another. Handles 80, 90 can each comprise corner portions 32 where arm 16 and hold portion 18 intersect. Different length arms and/or hold portions can be employed on any of the handles described herein.

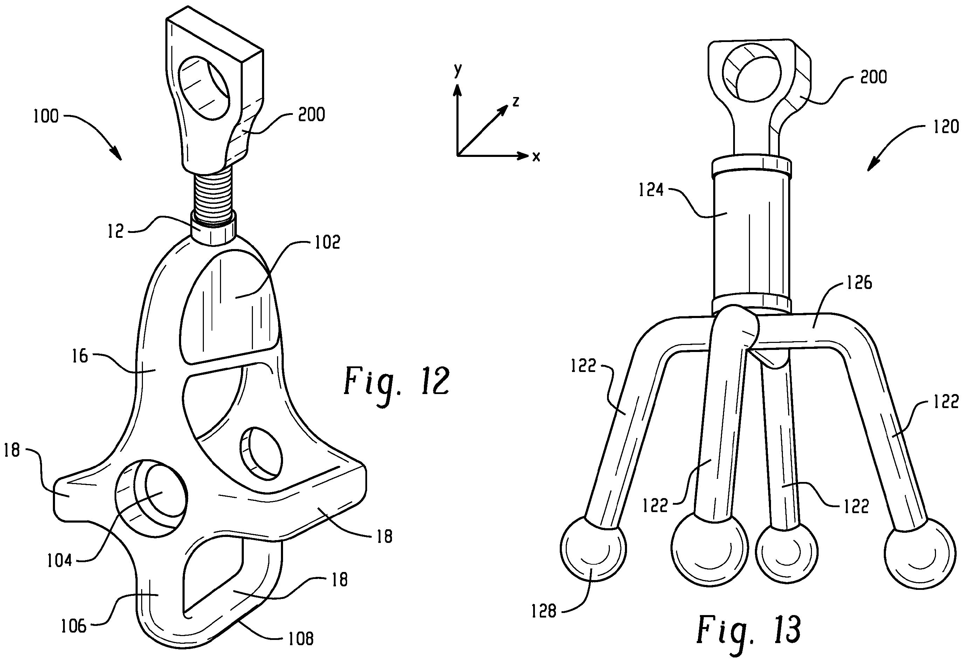

Figure 12 illustrates a handle 100 with greater than or equal to three hold portions 18, wherein hold portion(s) 18 can extend vertically (i.e., in the y direction) from the arm 16 and hold portion(s) 18 can extend horizontally (i.e., in the x direction) from arm 16. Hole 104 can be present between horizontally extending hold portions 18 wherein member 106 extends vertically from each hole 104 and can be connected therebetween with bar 108 to form a vertically extending hold portion 18. Optionally, instead of hole 104, a further center portion can be located between the hold portions 18. Center portion 102 can also be present on handle 100 beneath neck 12. As with the other center portions described herein, any shape can be used. As illustrated in Figure 12, the center portion can comprise a half circle with a surface for embellishments (e.g., attached to the surface, and/or formed into the surface).

Turning now to Figure 13, a handle 120 with four hold portions 122 is illustrated. The handle can comprise an area 124 comprising a generally cylindrical shape. As with the other center portions described herein, center portion 124 can have a surface that can allow embellishments to be placed on and/or into the surface thereof. Extensions 126 can protrude away from center portion 124 in a horizontal direction with the hold portion 122 extending vertically from the extensions 126. An element (e.g., a ball) 128 can be present on the hold portion 122, e.g., at the end of the hold portion 122 opposite the attachment mechanism 200, to provide a stop mechanism for a user's hand. Although four extensions 126 are illustrated extending radially, more or less extensions, and hence hold portions, are contemplated.

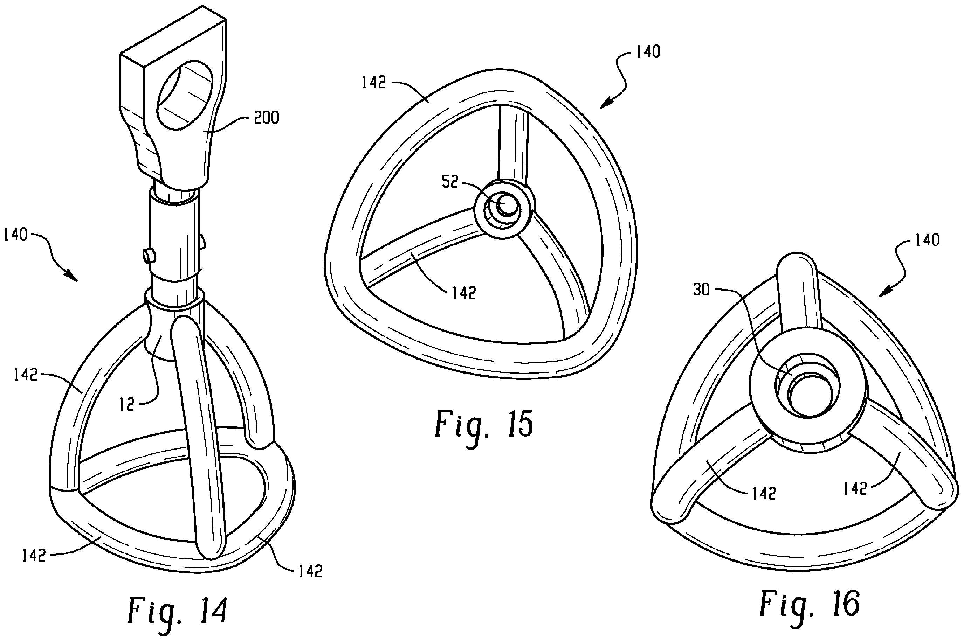

Figures 14, 15, and 16 illustrate a further embodiment where a handle 140 can comprise a neck 12 and greater than or equal to two hold portions 142 extending vertically downward from the neck with additional hold portions 142 extending between the vertical hold portions, such that greater than or equal to six users and hold onto handle 140 simultaneously. As with all of the previous figures, neck 12 can comprise an opening 30 with a bore 52 extending therethrough to allow an attachment mechanism 200 (see e.g., Figure 14) to be placed therein.

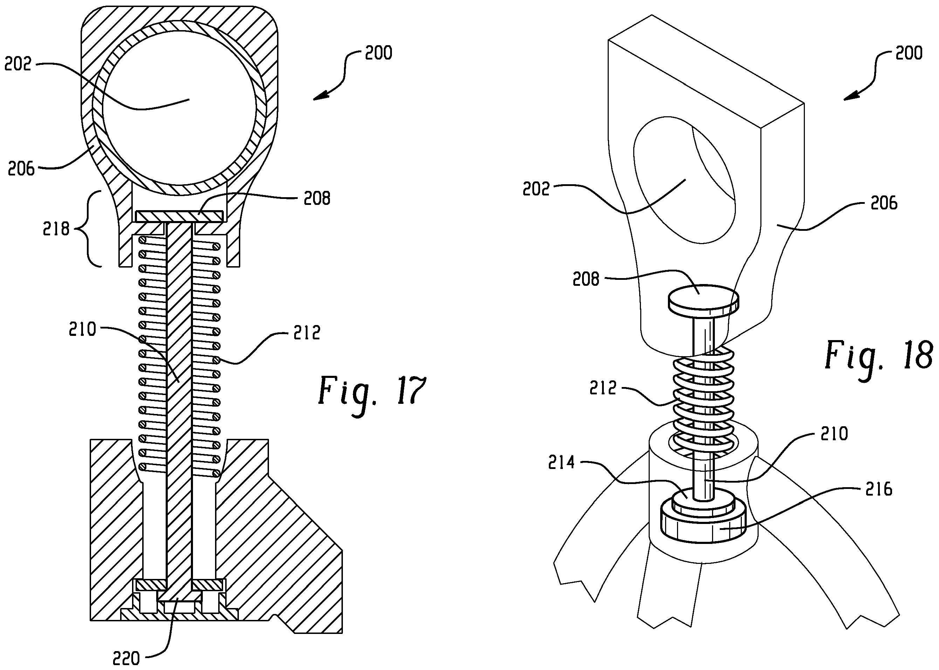

Attachment mechanism 200 is illustrated in Figures 8 to 14 and shown in further detail in Figures 17 to 19. The attachment mechanism 200 can attach the handle 10, 70, 80, 90, 100, 120, 140 to a commuter vehicle (e.g., to the ceiling with a tube inserted through attachment mechanism opening). It is to be understood that although shown with respect to a particular handle, the attachment mechanisms disclosed and described herein are equally applicable to each and every handle disclosed herein.

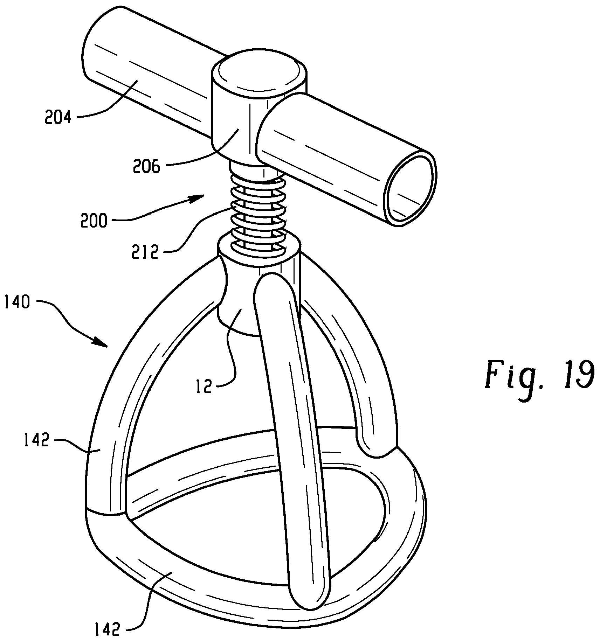

As illustrated in Figures 17 and 18, the attachment mechanism 200 can comprise a bracket 206 containing an attachment mechanism opening 202 through which a tube (rod, pipe, etc.) 204 can be inserted (see Figure 19) such that handles 10, 70, 80, 90, 100, 120, 140 can be attached to the commuter vehicle (e.g., suspended from the ceiling, attached to the side, etc.). The bracket 206 can further comprise a bracket base 218 that can enclose a collar 208 connected to a rod 210 wherein the rod 210 can comprise an end portion 220 on which a washer 214 can be inserted on one surface and a cap 216 can be inserted on an opposite surface to enclose the end portion 220. The washer 214 and cap 216 can help ensure the attachment mechanism 200 does not separate from the handle. Surrounding the rod 210 can be an optional spring 212 which can help dampen oscillations of the handle 10, 70, 80, 90, 100, 120, 140 during commuter vehicle movement where optional spaces above and/or below the end portion 220 or the collar 208 can be provided to allow the rod 210 to move and the spring 212 to express and expand. The rod's attachment to the bracket and/or the rod's attachment to the handle 10, 70, 80, 90, 100, 120, 140 (e.g., the washer 214/end portion 220/cap 216) can allow a swivel action (i.e., rotation) of the handle 10, 70, 80, 90, 100, 120, 140. The spring can prevent can prevent access to the internal components of the handle 10, 70, 80, 90, 100, 120, 140.

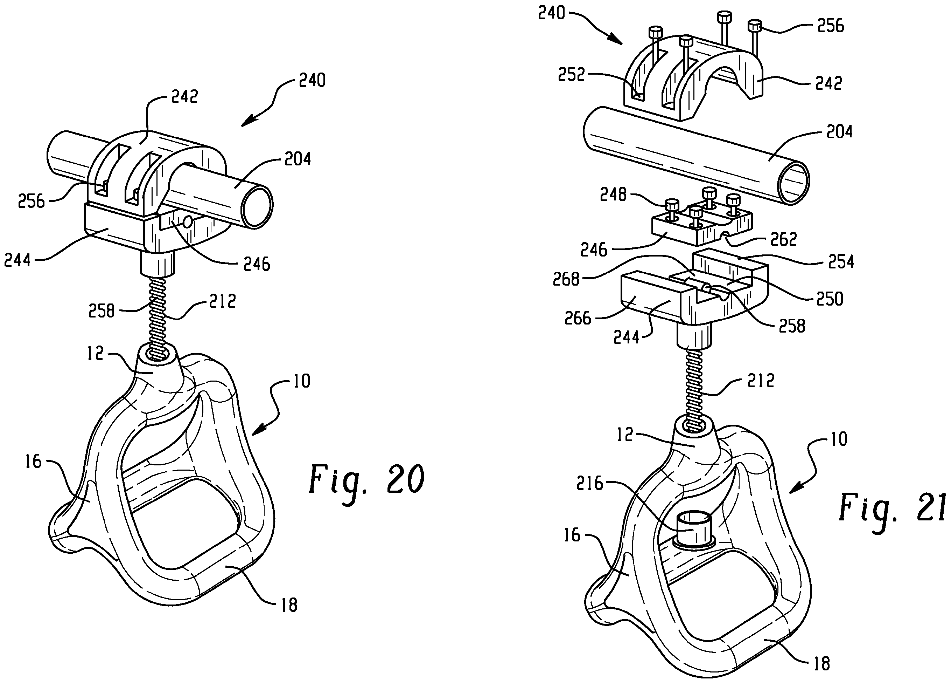

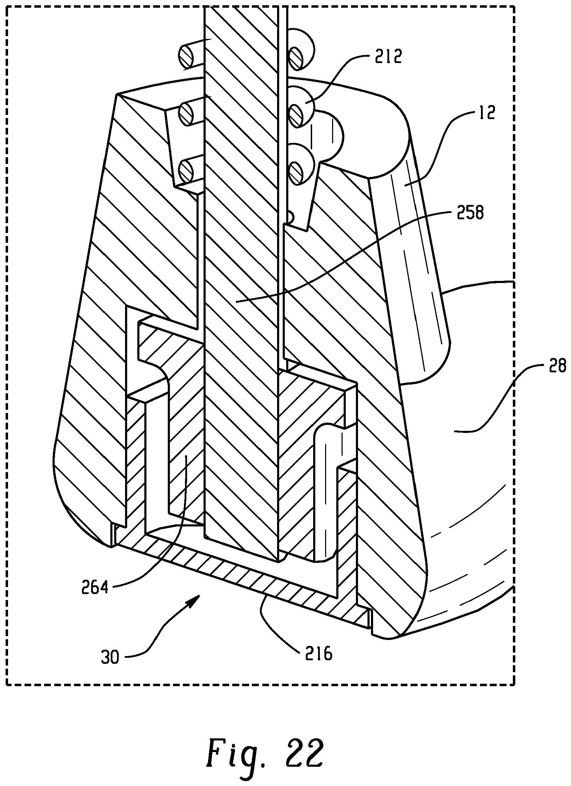

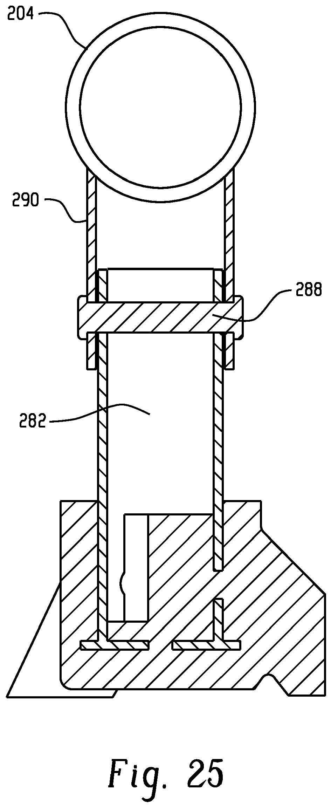

Additional attachment mechanisms are shown in Figures 20 to 26. For example, turning to Figures 20-22, attachment mechanism 240 is illustrated. Attachment mechanism 240 can comprise a first suspension portion 242 and a second suspension portion 244 as shown in detail in Figure 21, which is an exploded view of attachment mechanism 240 and handle 10. First suspension portion 242 and second suspension portion 244 can comprise a generally curved shaped (e.g., a half circle) to allow a tube 204 to be inserted therebetween. First suspension portion 242 can additionally comprise first suspension portion attachment points 252 which, through the use of attachment members 256, can attach to corresponding second suspension portion attachment points 254, thereby attaching the suspension portions to one another. The second suspension portion 244 can comprise a second extension portion protrusion 266 on either side of the second suspension portion 244 with a strap receiving portion 268 located therebetween to receive strap 246. On the strap receiving portion 268 can be a strap attachment point 250 to which strap attachment members 248 can attach. The strap 246 can also comprise a channel 262 configured to receive wire 258. The strap 246 can help hold the wire 258 in place when a force is applied to the handle 10. Surrounding the wire 258 can be spring 212 and cap 216 can be attached in the opening 30 (see Figure 3 for opening). Figure 22 shows a cross-sectional view of some of the interior components of attachment mechanism 240. As can be seen in Figure 22, the cap 216 can rest within the opening 30 of the neck 12 of the handle 10. A sleeve 264 can surround the wire 258 to assist in holding the wire in position. The sleeve 264 can optionally be crimped.

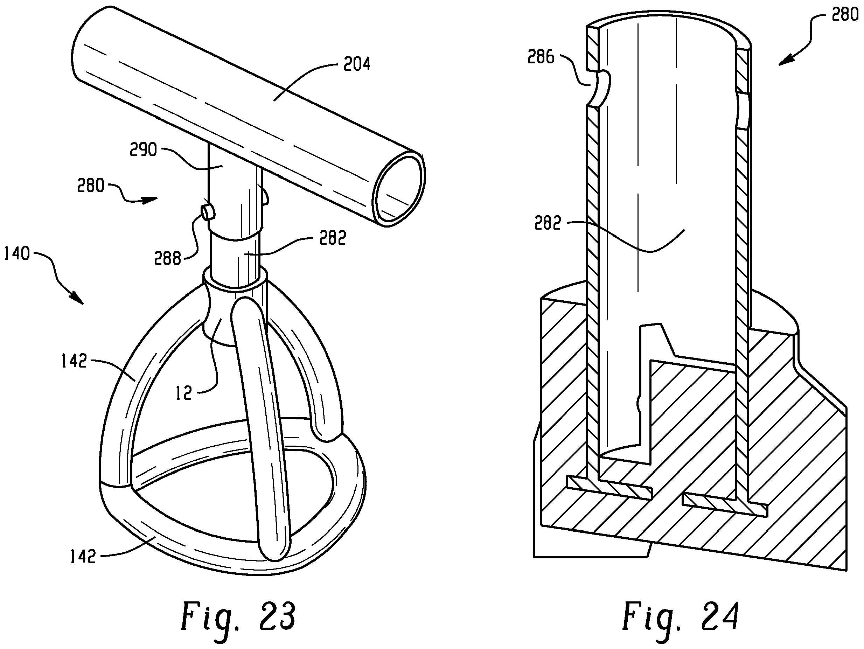

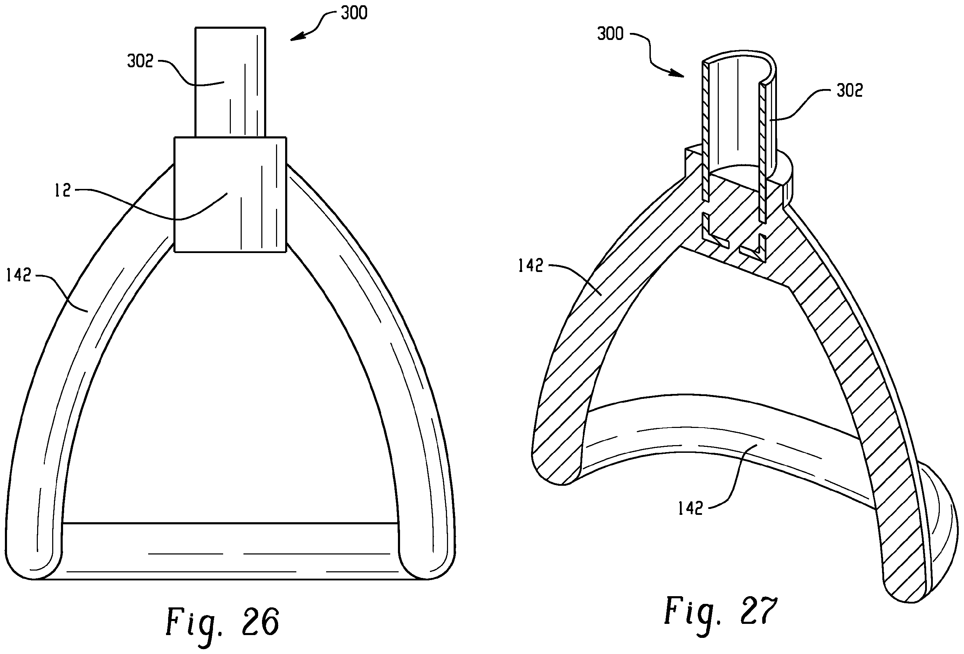

Figures 23 to 25 illustrate an attachment mechanism 280 where a pipe 282 can be integrally formed (e.g., insert molded) with the handle 140. The pipe 282 can comprise an aperture 286 into which a pin 288 can be inserted before a cover piece 290 has been inserted over the pipe 282 where the cover piece 290 can contain corresponding apertures to receive the pin 288. The pin 288 can extend into apertures in the cover piece 290 to attach the attachment mechanism 280 to the tube 204. Figures 26 and 27 illustrate a similar embodiment to the attachment mechanism 280. In attachment mechanism 300, a pipe 302 can be integrally molded (e.g., insert molded) with handle 140.

The attachment mechanisms and handles can comprise any material that will provide the desired strength and stiffness, e.g., metal, polymer (e.g., thermoplastic, or a combination of thermoplastic and thermoset), etc. Possible thermoplastic resins that can be employed in the handles and/or attachment mechanisms include, but are not limited to, oligomers, polymers, ionomers, dendrimers, copolymers such as graft copolymers, block copolymers (e.g., star block copolymers, random copolymers, etc.) and combinations comprising at least one of the foregoing. Examples of such thermoplastic resins include, but are not limited to, polycarbonates (e.g., blends of polycarbonate (such as, polycarbonate-polybutadiene blends, copolyester polycarbonates)), polystyrenes (e.g., copolymers of polycarbonate and styrene, polyphenylene ether-polystyrene blends), polyimides (e.g., polyetherimides), acrylonitrile-styrene-butadiene (ABS), polyalkylmethacrylates (e.g., polymethylmethacrylates (PMMA)), polyesters (e.g., copolyesters, polythioesters), polyolefins (e.g., polypropylenes (PP) and polyethylenes, high density polyethylenes

(HDPE), low density polyethylenes (LDPE), linear low density polyethylenes (LLDPE)), polyamides (e.g., polyamideimides), polyarylates, polysulfones (e.g., polyarylsulfones, polysulfonamides), polyphenylene sulfides, polytetrafluoroethylenes, polyethers (e.g., polyether ketones (PEK), polyether etherketones (PEEK), polyethersulfones (PES)), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazzanes, polysiloxanes, fluoropolymers (e.g., polyvinyl fluouride (PVF), polyvinylidene fluoride (PVDF), polyvinyl fluoride (PVF), fluorinated ethylene-propylene (FEP), polyethylenetetrafluoroethylene (ETFE)) and combinations comprising at least one of the foregoing.

More particularly, the thermoplastic resin can include, but is not limited to, polycarbonate resins (e.g., LEXAN* resins, commercially available from SABIC's Innovative Plastics business), polyphenylene ether-polystyrene resins (e.g., NORYL* resins, commercially available from SABIC's Innovative Plastics business), polyetherimide resins (e.g., ULTEM* resins, commercially available from SABIC's Innovative Plastics business), polycarbonate/acrylonitrile-butadiene-styrene resins (e.g., CYCOLOY*, commercially available from SABIC's Innovative Plastics business), polybutylene terephthalate-polycarbonate resins (e.g., XENOY* resins, commercially available from SABIC's Innovative Plastics business), copolyestercarbonate resins (e.g. LEXAN* SLX resins, commercially available from SABIC's Innovative Plastics business), and combinations comprising at least one of the foregoing resins. Even more particularly, the thermoplastic resin can include, but is not limited to, homopolymers and copolymers of: a polycarbonate, a polyester, a polyacrylate, a polyamide, a polyetherimide, a polyphenylene ether, or a combination comprising at least one of the foregoing resins. The polycarbonate can comprise copolymers of polycarbonate (e.g., polycarbonate-polysiloxane, such as polycarbonate-polysiloxane block copolymer), linear polycarbonate, branched polycarbonate, end-capped polycarbonate (e.g., nitrile end-capped polycarbonate), and combinations comprising at least one of the foregoing, for example a combination of branched and linear polycarbonate.

The thermoplastic resin can further include various additives ordinarily incorporated into polymer compositions of this type, with the proviso that the additive(s) are selected so as to not significantly adversely affect the desired properties of the handle and/or attachment mechanism, in particular, stress and flexural stiffness. Such additives can be mixed at a suitable time during the mixing of the components for forming the handle and/or attachment mechanism. Exemplary additives include impact modifiers, fillers, reinforcing agents, antioxidants, heat stabilizers, light stabilizers, ultraviolet (UV) light stabilizers, plasticizers, lubricants, mold release agents, antistatic agents, colorants (such as carbon black and organic dyes), surface effect additives, radiation stabilizers (e.g., infrared absorbing), flame retardants, and anti-drip agents. A combination of additives can be used, for example a combination of a heat stabilizer, mold release agent, and ultraviolet light stabilizer. In general, the additives are used in the amounts generally known to be effective. The total amount of additives (other than any impact modifier, filler, or reinforcing agents) is generally 0.001 wt.% to 5 wt.%, based on the total weight of the composition of the handle and/or attachment mechanism.

The handles can be hollow, solid, or a combination thereof. Hollow handles have a desirably lower mass than solid handles, thus reducing the overall weight the handles add to the commuter vehicle when installed. Hollow handles can also be processed (e.g., molded) more quickly than solid handles, thus increasing output. Optionally, hollow portions of the grab handles can comprise rib(s) for further structural integrity. For example, the neck and across the corners to the arms can be solid, wherein the arms and hold portions can be hollow.

The measurements for the various components of the handles described herein can vary. For example, for solid handles, the diameter of the arms and hold portions can be less than or equal to 25 mm, specifically, less than or equal to 20 mm, while for hollow handles, the diameter of the arms and hold portions can be less than or equal to 9 mm, specifically, less than or equal to 8 mm, more specifically, less than or equal to 6 mm. The protuberance, when present, can have a width of greater than the width of the neck to less than or equal to 40 mm, while the neck can vary in diameter where the first neck portion can have an internal diameter of 10 mm to 15, while the second neck portion can have an internal diameter of 16 mm to 20 mm, and the third neck portion can have an internal diameter of 22 mm to 30 mm. The opening can have a diameter of 25 to 30 mm. The width of the corner portions can be 15 mm to 30 mm, specifically, less than or equal to 25 mm, while the length of the neck from the opening through the bore can be 30 mm to 45 mm, specifically 40 mm to 45 mm, and more specifically, 42 mm, and the width of the arms and hold portions can be 10 mm to 30 mm, specifically, 15 mm to 25 mm, more specifically, less than or equal to 25 mm, and even more specifically, less than or equal to 20 mm. An overall height of the handles, e.g., from the neck to the hold portions, can be less than or equal to 150 mm, specifically, less than or equal to 135 mm, and even more specifically, less than or equal to 125 mm. The overall height of the neck (e.g., from the opening in the first neck portion through the third neck portion can be less than or equal to 50 mm, specifically, less than or equal to 45 mm, and more specifically, less than or equal to 42 mm.

It is to be understood that the various components of the attachment mechanisms and/or the handles can be made from the same or different material, e.g., the handle can comprise a thermoplastic resin as herein described and the attachment mechanism can comprise a different or the same thermoplastic resin or can comprise a metal (e.g., aluminum, steel, etc.). The attachment mechanisms described herein can comprise a variety of materials if desired. The various components of the attachment mechanism, such as the spring, rod, tube, first and second attachment points, bracket, socket, washer, collar, pipe, pine, cover piece, cap, can each, individually, comprise a metal or thermoplastic resin as described herein. For example, the spring, rod, tube, first and second attachment points, sockets, collar, washer, pipe, and/or pin can comprise a metal (e.g., aluminum, steel, etc.), while the cap and/or cover piece can comprise a thermoplastic resin as herein described.

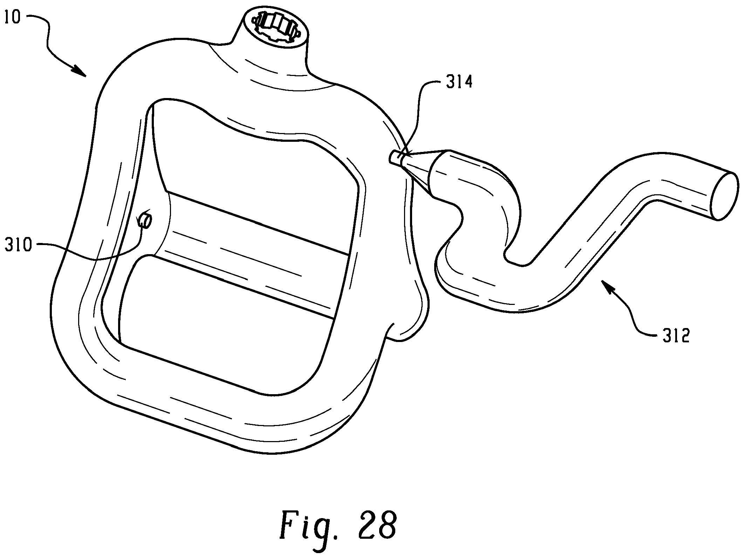

The handles and/or attachment mechanisms described herein can be manufactured by any method that will provide the desired shape and structural stiffness, for example, injection molding. Gas assisted injection molding (GAIM) can be used to mold the handles disclosed herein with a single gas injection pin 310 as illustrated in Figure 28. Alternatively water assisted injection molding can be used to mold the handles. Gas assisted injection molding involves the use of nitrogen gas during molding to help apply uniform pressure through the molded part (e.g., handle). The introduction of nitrogen gas displaces molten polymer from thicker sections of the part toward areas in the cavity that are the last to fill, thereby creating channels within the part. Through the gas channels, pressure can be transmitted evenly across the part, helping to reduce and/or eliminate warpage, sink marks, and internal stress. Such reductions and/or eliminations can reduce clamp tonnage, cycle time, and part weight, while strength and rigidity of the part is increased. In gas assisted injection molding, a thermoplastic resin is melted and injected into a cavity mold using an injection molding press. As the melt begins to solidify, the area in contact with the mold walls will harden first. At this point, nitrogen gas is injected into the melt, effectively pressurizing it from the inside out. The internal pressure of the gas pushes the molten material to the extremities of the cavity, which are the last to fill (also known as "core out"). The gaseous nitrogen always follows the path of least resistance. Once the material has cooled to a sufficient degree, the nitrogen is vented, the mold is opened, and the part is ejected.

Using gas assisted injection molding can significantly decrease the cycle times to mold the part. For example, without the use of gas assisted injection molding, the cycle time can be greater than or equal to 180 seconds along with difficulties molding because of the thickness of the part (e.g., 25 mm to 30 mm) requiring very long cooling times. With the use of gas assisted injection molding, the cycle time can be reduced to less than or equal to 90 seconds (a 100% reduction). As seen in Figure 28, the handle 10 can be formed via a gas assisted injection molding process with one gas injection pin 310 and an overflow well 312, which can help facilitate maximum core out in the part as previously described. The gate 314 for the overflow well 312 is also illustrated in Figure 28. It is to be understood that although illustrated with respect to a particular handle, any of the handles disclosed herein can be formed with any of the processes described and that gas assisted injection molding is not limited to handle 10.

The following example are merely illustrative of the handles disclosed herein and are not intended to limit the scope hereof. Unless otherwise stated, all examples disclosed below were performed using simulations.

### EXAMPLES

In each of the following examples, handles are modeled using Solid Works software; molding studies are conducted using MOLDFLOW software and structural simulations are conducted using ABAQUS simulation software. Polycarbonate (i.e., LEXAN* EXL9134, commercially available from SABIC's Innovative Plastics business) is used as the material for the handles. Forces are applied as indicated to measure the stress levels achieved for the parts. The yield strength for the material used is 60.7 MPa, so it is desirable for the handles to not experience stress levels above this value to prevent failure of the part, where failure can be in the form of breakage, cracks, or permanent deformation. Simulations are conducted at room temperature (e.g., 23°C). Maximum Stress refers to the application of a load to a part and the measurement of the maximum stress in a particular location of the part after the load has been removed.

### Example 1

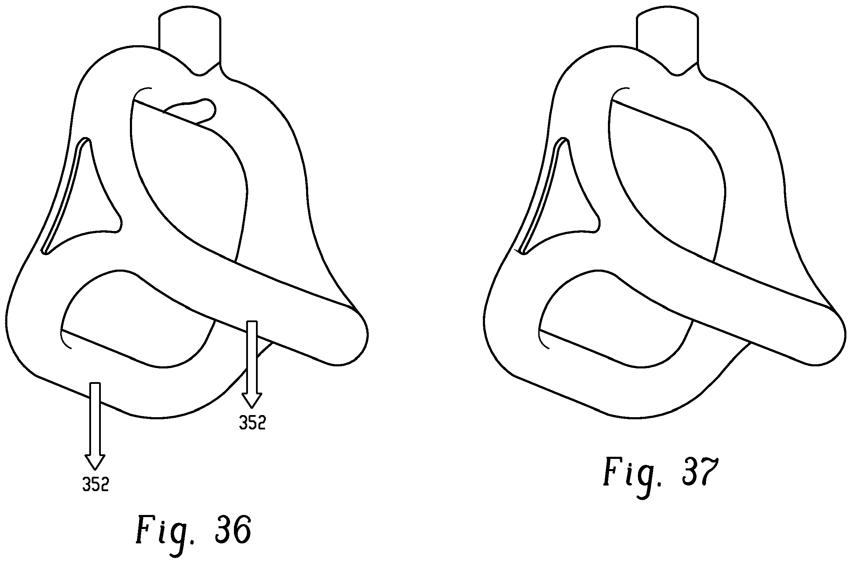

Sample 1, a handle having the design illustrated in Figures 1 to 7, 20, 21, and 29, is simulated for various mechanical properties and compared to Sample 2, which is a handle having the design as seen in Figure 37, i.e., the same design as in these figures but without protuberance 29. Loads of 200 kilograms (kg) are applied to the hold portions of the handle as illustrated in Figure 36. Stress of nearly 60 MegaPascals (MPa) is observed for a Sample 2 near the neck portion of the handle, while for Sample 2, stress in the same portion of the handle is reduced by nearly 30% to about 40 MPa, indicating that the addition of the protuberance plays a role in strengthening the handle and reducing the amount of stress the handle experiences in this portion of the handle.

The fillet portion of the handle of Sample 1 is also simulated for stress levels and compared to Sample 2, which does not have the fillet of Sample 1. During the stress simulation using the same program, material, and simulation conditions described above, Sample 2 experiences a stress of 60 MPa, while the handle having the design with a protuberance and fillet as described herein experiences a stress of only 42 MPa, a decrease of 30%. This simulation further illustrates that a handle having a protuberance and fillet such as Sample 1 can experience less stress than designs without such a protuberance or fillet (Sample 2).

In another simulation, Sample 3, which is a handle having the design of Figure 10, and Sample 1 are simulated for Maximum where the arm diverges into hold portions and at the diverging portion in Sample 3 and where the arm diverges into hold portions and the plateau in the handle of Sample 1. Both Samples 1 and 3 are subjected to a vertical downward force of 200 kilograms (kg) on each hold portion. It is observed that Sample 3 has a Maximum Stress of 59 MPa at the diverging portion (see reference no. 26 in Figure 10), while Sample 1 has a Maximum Stress of less than or equal to 15 MPa at the plateau portion of the diverging portion (see reference number 60 in Figure 4).

### Example 2

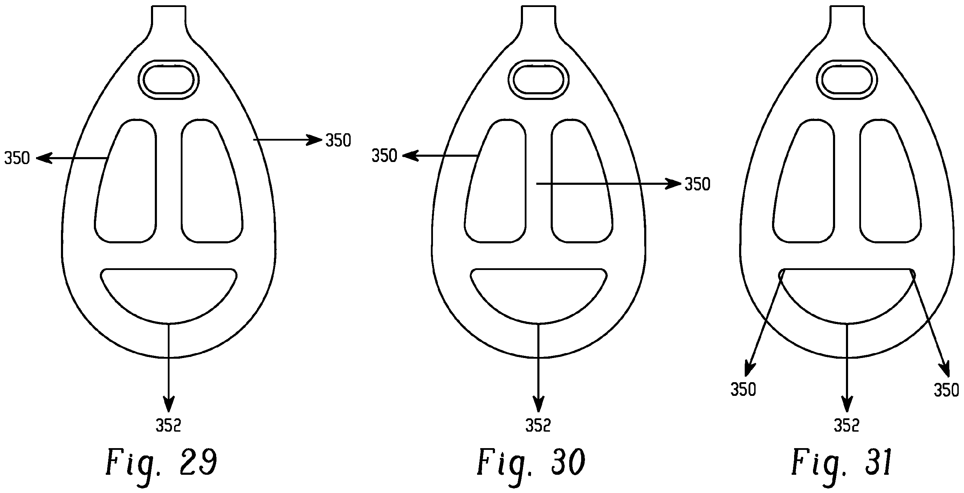

In this example, Samples 4, 5, and 6, handles having the design of Figure 9 are simulated with a 100 kg horizontal force 350 on either side of the handle and a 200 kg vertical force 352 on a bottom of the handle as shown in Figures 29, 30, and 31, respectively. Table 1 illustrates the results of the simulations. Maximum displacement is measured in mm and Maximum Stress is simulated as described above and measured in MPa.

| Table 1: Stress Measurements | | |
|---|---|---|
| Sample No. | Max. Displacement (mm) | Max. Stress (MPa) |
| 4 | 0.527 | 11.15 |
| 5 | 0.696 | 12.33 |
| 6 | 0.789 | 12.61 |

As can be seen in Table 1, each of Samples 4, 5, and 6 have displacement values less than or equal to 1.0, specifically, less than or equal to 0.9, and more specifically, less than or equal to 0.8 and Maximum Stress values of less than or equal to 25 MPa, specifically, less than or equal to 20 MPa, and more specifically, less than or equal to 15 MPa.

### Example 3

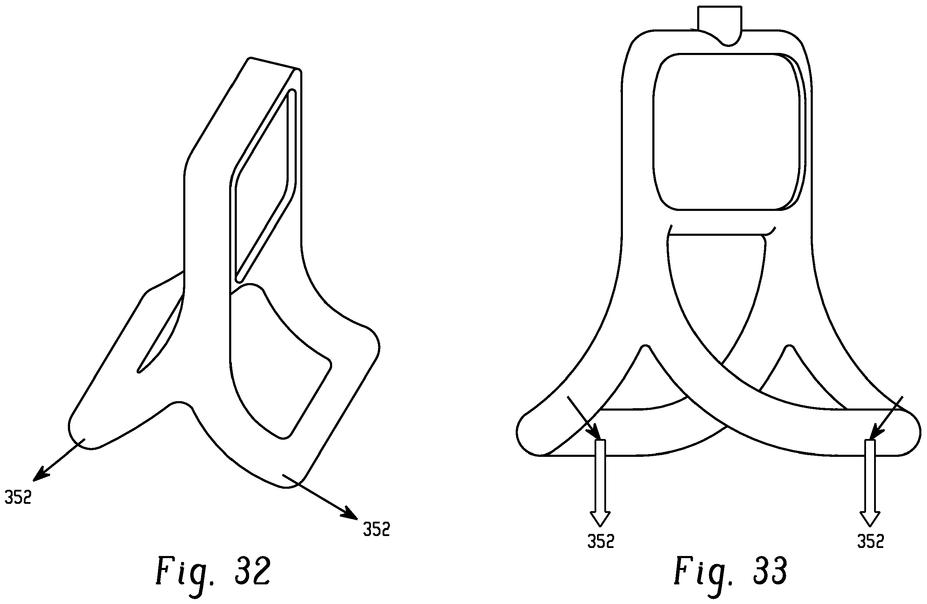

In this Example, Samples 7 and 8 are simulated with forces of 200 kg as shown in Figures 32 and 33, respectively. Samples 7 and 8 both have the handle design of Figure 10. The same simulations as described with respect to Example 2 are conducted with results illustrated in Table 2.

| Table 2: Stress Measurements | | |
|---|---|---|
| Sample No. | Max. Displacement (mm) | Max. Stress (MPa) |
| 7 | 2.728 | 29.09 |
| 8 | 11.14 | 58.91 |

As can be seen in Table 2, displacement and stress measurements for Samples 7 and 8 are higher than those observed for Samples 4, 5, and 6, indicating that some strengthening of the structure can be desired.

### Example 4

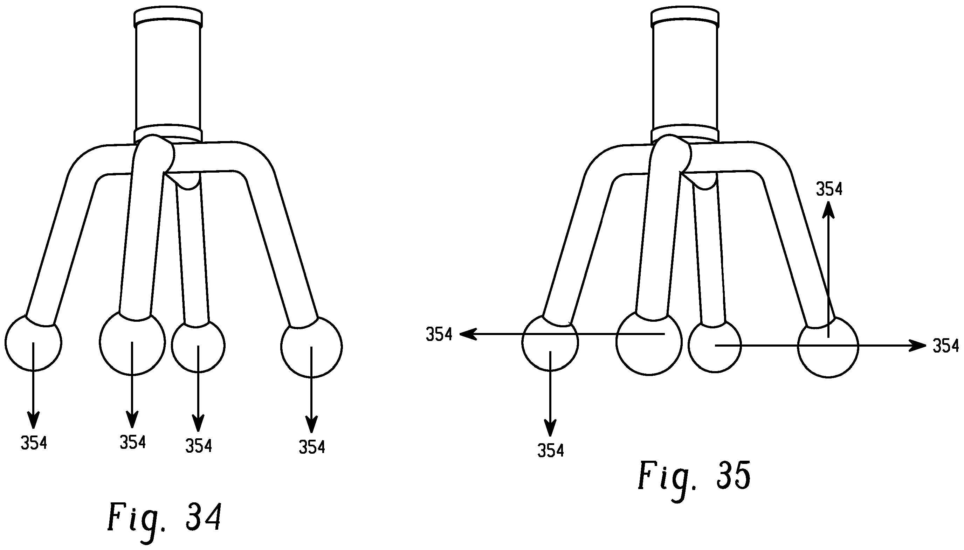

In Example 4, Samples 9 and 10 are handles having the design illustrated in Figure 13. Loads for Sample 9 are shown in Figure 34 and loads for Sample 10 are shown in Figure 35. In Figure 35, loads of 50 kg 354 are utilized. Simulations are the same as those previously described. Results are shown in Table 3.

| Table 3: Stress Measurements | | |
|---|---|---|
| Sample No. | Max. Displacement (mm) | Max. Stress (MPa) |
| 9 | 26.91 | 58.85 |
| 10 | 67.45 | 57.8 |

As can be seen in Table 3, displacement and stress measurements for Samples 9 and 10 are even higher than those observed for Samples 7 and 8, indicating that some strengthening of the structure can be desired.

In an embodiment, a handle comprises: a neck; and a body portion extending from the neck, wherein the body portion comprises a corner portion extending from the neck, an arm extending from the corner portion, and greater than or equal to two hold portions extending from the arm.

In an embodiment, commuter vehicle comprises: a handle comprising a neck; and a body portion extending from the neck, wherein the body portion comprises a corner portion extending from the neck, an arm extending from the corner portion, and greater than or equal to two hold portions extending from the arm; and an attachment mechanism, wherein the attachment mechanism attaches to the handle of the commuter vehicle.

In an embodiment, a method of making a handle comprises: melting a polymer; injecting the polymer into a cavity to form a handle comprising a neck and a body portion extending from the neck, wherein the body portion comprises a corner portion extending from the neck, an arm extending from the corner portion, and greater than or equal to two hold portions extending from the arm; injecting nitrogen gas into the melt through a gas injection pin as the melt begins to solidify; pushing the melt to the extremities of the cavity; cooling the melt; venting the nitrogen gas; opening the mold; and ejecting the handle.

In another embodiment, a handle can comprise: a neck having a bore therethrough; an attachment mechanism extending through the bore; and a body portion extending from the neck and comprising multiple hold portions each having a size and configuration to be grasped by a hand.

In yet another embodiment, a handle can comprise: a neck having a bore therethrough, with ribs extending radially into the bore in a first neck portion; an attachment mechanism extending through the bore; and a body portion extending from the neck. Extending from around the neck is a protuberance having a diameter (e.g., outer diameter) that is greater than a diameter of the neck. The protuberance is located between corner portions that connect the neck to arms. The arms extend to form hold portions configured to be grasped by a hand.

In the various embodiments, (i) the handle comprises greater than or equal to three hold portions; and/or (ii) the handle comprises greater than or equal to four hold portions; and/or (iii) the handle comprises greater than or equal to five hold portions; and/or (iv) the handle comprises greater than or equal to six hold portions; and/or (v) an inner surface of the hold portions comprise a textured surface; and/or (vi) the neck comprises a protuberance surrounding the neck, wherein the protuberance has an increased diameter compared to the neck; and/or (vii) the neck further comprises a fillet near the corner portion, wherein the fillet comprises a greater diameter than the neck; and/or (viii) the neck comprises an opening with a bore extending therethrough; and/or (ix) the neck further comprises alternating ribs extending radially inward from an inner wall of a first neck portion and indentations forming a portion of the inner wall; and/or (x) a ledge having a generally flat surface connects the first neck portion to the second neck portion; and/or (xi) the bore has first bore diameter in the second neck portion and a first bore diameter in a third neck portion; and/or (xii) the arm comprises a base portion extending into a diverging portion, wherein the base portion comprises an indentation; and/or (xiii) the indentation comprises an embellishment; and/or (xiv) the diverging portion comprises a plateau; and/or (xv) the hold portions vary in height; and/or (xvi) the neck and body are formed from a polymer; and/or (xvii) the polymer comprises polycarbonate, polyetherimide, or a combination comprising at least one of the foregoing; and/or (xviii) the handle further comprises an attachment mechanism that extends through the neck; and/or (xix) the attachment mechanism comprises a first suspension portion connected to a second suspension portion with an opening therebetween configured to receive a tube; and/or (xx) the attachment mechanism comprises an insert molded pipe in the neck; and/or (xxi) the polymer comprises polycarbonate, polyetherimide, or a combination comprising at least one of the foregoing; and/or (xxiii) wherein the embellishment is formed into a surface of the base portion; and/or (xxiii) wherein under a vertical force of 200 kilograms on each hold portion (e.g., a force pulling downward), the handle experiences a stress of less than or equal to 40 MegaPascals and/or a displacement of less than or equal to 3.5 millimeters; and/or (xxiii) wherein under a vertical force of 200 kg on each hold portion (e.g., a force pulling downward), the handle experiences a stress of less than 30 MegaPascals and a displacement of less than or equal to 3.0 millimeters.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to d one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

## Claims

1. A handle (10), comprising:
a neck (12); and
a body portion (14) extends from the neck (12), wherein the body portion (14) comprises a corner portion (22,32) extending from the neck (12), an arm (16) extending from the corner portion (22,32), and greater than or equal to two hold portions (18) extending from the arm (16); **characterized in that**
the neck (12) further comprises a fillet (34) near the corner portion (22,32), wherein the fillet (34) comprises a greater diameter than the neck (12) and/or
wherein the neck (12) further comprises alternating ribs (40) extending radially inward from an inner wall (44) of a first neck portion (46) and indentations (20) forming a portion of the inner wall (44).

2. The handle (10) of Claim 1, comprising greater than or equal to three hold portions (18), preferably greater than or equal to four hold portions (18), more preferably greater than or equal to five hold portions (18), more preferably greater than or equal to six hold portions (18).

3. The handle (10) of any of Claims 1-2, wherein an inner surface (38) of the hold portions (18) comprise a textured surface.

4. The handle (10) of any of Claims 1-3, wherein the neck (12) comprises a protuberance (28) surrounding the neck (12), wherein the protuberance (28) has an increased diameter compared to the neck (12).

5. The handle (10) of any of Claims 1-4, wherein the neck (12) comprises an opening (30) with a bore (52) extending therethrough.

6. The handle (10) of any of Claims 1-5, wherein a ledge (48) having a generally flat surface connects the first neck portion (46) to a second neck portion (50).

7. The handle (10) of Claim 6, wherein the bore (52) has first bore diameter (54) in the second neck portion (50) and a second bore diameter (58) in a third neck portion (56).

8. The handle (10) of any of Claims 1-7, wherein the arm (16) comprises a base portion extending into a diverging portion (26), wherein the base portion comprises an indentation (20).

9. The handle (10) of Claim 8, wherein the indentation (20) comprises an embellishment and wherein the diverging portion (26) comprises a plateau (60).

10. The handle (10) of any of Claims 1-9, wherein the hold portions (18) vary in height.

11. The handle (10) of any of Claims 1-10, wherein the neck (12) and the body portion (14) are formed from a polymer.

12. The handle (10) of any of Claims 1-11, further comprising an attachment mechanism (200,240,280,300) that extends through the neck.

13. The handle of Claim 12, wherein the attachment mechanism (240) comprises a first suspension portion (242) connected to a second suspension portion (244) with an opening therebetween configured to receive a tube (204).

14. A commuter vehicle, comprising:
a handle (10) of any of Claims 12-13;
wherein the attachment mechanism (200,240,280,300) attaches to the handle (10) to the commuter vehicle.

15. A method of making a handle (10), comprising:
melting a polymer to form a melt;
**characterized in that**, injecting the polymer into a cavity to form a handle (10) comprising a neck (12); and a body portion (14) extending from the neck (12), wherein the body portion (14) comprises a corner portion (22,32) extending from the neck (12), an arm (16) extending from the corner portion (22,32), and greater than or equal to two hold portions (18) extending from the arm (16) wherein the neck (12) further comprises a fillet (34) near the corner portion (22,32), wherein the fillet (34) comprises a greater diameter than the neck (12) and/or wherein the neck (12) further comprises alternating ribs (40) extending radially inward from an inner wall (44) of a first neck portion (46) and indentations (20) forming a portion of the inner wall (44);
injecting nitrogen gas into the melt through a gas injection pin (310) as the melt begins to solidify;
pushing the melt to the extremities of the cavity;
cooling the melt;
venting the nitrogen gas;
opening the mold; and
ejecting the handle (10).

## Patentansprüche

1. Griff (10), der Folgendes aufweist:
einen Hals (12) und
ein Körperstück (14), das sich von dem Hals (12) erstreckt, wobei das Körperstück (14) einen Eckteil (22, 32), der sich von dem Hals (12) erstreckt, einen Arm (16), der sich von dem Eckteil (22, 32) erstreckt, und größer oder gleich als zwei Halteteile (18), die sich von dem Arm (16) erstrecken, aufweist; **dadurch gekennzeichnet, dass**
der Hals (12) ferner eine Ausrundung (34) nahe dem Eckteil (22, 32) aufweist, wobei die Ausrundung (34) einen größeren Durchmesser als der Hals (12) aufweist, und/oder
wobei der Hals (12) ferner abwechselnde Rippen (40), die sich von einer Innenwand (44) eines ersten Halsteils (46) radial einwärts erstrecken, und Vertiefungen (20), die einen Teil der Innenwand (44) bilden, aufweist.

2. Griff (10) nach Anspruch 1, der größer oder gleich drei Halteteile (18), vorzugsweise größer oder gleich vier Halteteile (18), mehr vorzugsweise größer oder gleich fünf Halteteile (18), mehr vorzugsweise größer oder gleich sechs Halteteile (18) aufweist.

3. Griff (10) nach einem der Ansprüche 1 bis 2, wobei eine Innenfläche (38) der Halteteile (18) eine texturierte Oberfläche aufweist.

4. Griff (10) nach einem der Ansprüche 1 bis 3, wobei der Hals (12) einen den Hals (12) umgebenden Wulst (28) aufweist, wobei der Wulst (28) verglichen mit dem Hals (12) einen größeren Durchmesser hat.

5. Griff (10) nach einem der Ansprüche 1 bis 4, wobei der Hals (12) eine Öffnung (30) mit einer durch sie hindurch verlaufenden Bohrung (52) aufweist.

6. Griff (10) nach einem der Ansprüche 1 bis 5, wobei eine Leiste (48) mit einer allgemein flachen Oberfläche den ersten Halsteil (46) mit einem zweiten Halsteil (50) verbindet.

7. Griff (10) nach Anspruch 6, wobei die Bohrung (52) in dem zweiten Halsteil (50) einen ersten Bohrungsdurchmesser (54) und in einem dritten Halsteil (56) einen zweiten Bohrungsdurchmesser (58) hat.

8. Griff (10) nach einem der Ansprüche 1 bis 7, wobei der Arm (16) einen Basisteil aufweist, der sich in einen auseinandergehenden Teil (26) erstreckt, wobei der Basisteil eine Vertiefung (20) aufweist.

9. Griff (10) nach Anspruch 8, wobei die Vertiefung (20) eine Verzierung aufweist und wobei der auseinandergehende Teil (26) ein Plateau (60) aufweist.

10. Griff (10) nach einem der Ansprüche 1 bis 9, wobei die Höhen der Halteteile (18) verschieden sind.

11. Griff (10) nach einem der Ansprüche 1 bis 10, wobei der Hals (12) und das Körperstück (14) aus einem Polymer hergestellt sind.

12. Griff (10) nach einem der Ansprüche 1 bis 11, der ferner einen Anbringungsmechanismus (200, 240, 280, 300) aufweist, der durch den Hals verläuft.

13. Griff nach Anspruch 12, wobei der Anbringungsmechanismus (240) einen ersten Aufhängungsteil (242), der mit einem zweiten Aufhängungsteil (244) verbunden ist, mit einer Öffnung dazwischen, die zum Aufnehmen eines Rohres (204) gestaltet ist, aufweist.

14. Pendlerfahrzeug, das Folgendes aufweist:
einen Griff (10) nach einem der Ansprüche 12 bis 13;
wobei der Anbringungsmechanismus (200, 240, 280, 300) den Griff (10) an dem Pendlerfahrzeug anbringt.

15. Verfahren zum Herstellen eines Griffs (10), das Folgendes aufweist:
Schmelzen eines Polymers zum Herstellen einer Schmelze;
**dadurch gekennzeichnet, dass** das Polymer in eine Kavität eingespritzt wird, um einen Griff (10) herzustellen, der einen Hals (12) und ein Körperstück (14), das sich von dem Hals (12) erstreckt, aufweist, wobei das Körperstück (14) einen Eckteil (22, 32), der sich von dem Hals (12) erstreckt, einen Arm (16), der sich von dem Eckteil (22, 32) erstreckt, und größer oder gleich zwei Halteteile (18), die sich von dem Arm (16) erstrecken, aufweist, wobei der Hals (12) ferner eine Ausrundung (34) nahe dem Eckteil (22, 32) aufweist, wobei die Ausrundung (34) einen größeren Durchmesser als der Hals (12) aufweist und/oder wobei der Hals (12) ferner abwechselnde Rippen (40), die sich von einer Innenwand (44) eines ersten Halsteils (46) radial einwärts erstrecken, und Vertiefungen (20), die einen Teil der Innenwand (44) bilden, aufweist;
Einspritzen von Stickstoffgas in die Schmelze durch einen Gasinjektionsstift (310) zu Beginn der Erstarrung der Schmelze;
Schieben der Schmelze zu den Wänden der Kavität;
Kühlen der Schmelze;
Ablassen des Stickstoffgases;
Öffnen der Form und
Ausformen des Griffs (10).

## Revendications

1. Poignée (10) comprenant :
un col (12) ; et
une partie de corps (14) s'étendant depuis le col (12), la partie de corps (14) comprenant une partie d'angle (22, 32) s'étendant depuis le col (12), un bras (16) s'étendant depuis la partie d'angle (22, 32), et deux ou plus de deux parties de retenue (18) s'étendant depuis le bras (16) ; **caractérisée en ce que**
le col (12) comprend en outre un congé de raccordement (34) à proximité de la partie d'angle (22, 32), ledit congé de raccordement (34) ayant un plus grand diamètre que le col (12) et/ou
le col (12) comprend en outre des nervures alternées (40) s'étendant radialement vers l'intérieur depuis une paroi interne (44) d'une première partie de col (46) et des encoches (20) formant une partie de la paroi interne (44).

2. Poignée (10) selon la revendication 1, comprenant trois ou plus de trois parties de retenue (18), de préférence quatre ou plus de quatre parties de retenue (18), de façon privilégiée cinq ou plus de cinq parties de retenue (18), de façon privilégiée six ou plus de six parties de retenue (18).

3. Poignée (10) selon l'une quelconque des revendications 1 à 2, dans laquelle une surface interne (38) des parties de retenue (18) comprend une surface structurée.

4. Poignée (10) selon l'une quelconque des revendications 1 à 3, dans laquelle le col (12) comprend une protubérance (28) entourant le col (12), ladite protubérance (28) ayant un diamètre plus grand par rapport au col (12).

5. Poignée (10) selon l'une quelconque des revendications 1 à 4, dans laquelle le col (12) comprend une ouverture (30) avec un trou (52) la traversant.

6. Poignée (10) selon l'une quelconque des revendications 1 à 5, dans laquelle un épaulement (48) ayant une surface généralement plate relie la première partie de col (46) à une seconde partie de col (50).

7. Poignée (10) selon la revendication 6, dans laquelle le trou (52) présente un premier diamètre de trou (54) dans la seconde partie de col (50) et un deuxième diamètre de trou (58) dans une troisième partie de col (56).

8. Poignée (10) selon l'une quelconque des revendications 1 à 7, dans laquelle le bras (16) comprend une partie de base se prolongeant en une partie divergente (26), la partie de base comprenant une encoche (20).

9. Poignée (10) selon la revendication 8, dans laquelle l'encoche (20) comprend un embellissement et dans laquelle la partie divergente (26) comprend un plateau (60).

10. Poignée (10) selon l'une quelconque des revendications 1 à 9, dans laquelle les parties de retenue (18) varient en hauteur.

11. Poignée (10) selon l'une quelconque des revendications 1 à 10, dans laquelle le col (12) et la partie de corps (14) sont fabriqués dans un polymère.

12. Poignée (10) selon l'une quelconque des revendications 1 à 11, comprenant en outre un mécanisme de fixation (200, 240, 280, 300) qui s'étend à travers le col.

13. Poignée selon la revendication 12, dans laquelle le mécanisme de fixation (240) comprend une première partie de suspension (242) connectée à une seconde partie de suspension (244) avec une ouverture entre les deux destinée à recevoir un tube (204).

14. Véhicule de transport en commun, comprenant
une poignée (10) selon l'une quelconque des revendications 12 à 13 ;
le mécanisme de fixation (200, 240, 280, 300) fixant la poignée (10) au véhicule de transport en commun.

15. Procédé pour fabriquer une poignée (10) comprenant :
la fusion d'un polymère pour former une masse fondue ;
**caractérisé par** l'injection du polymère dans une cavité pour former une poignée (10) comprenant un col (12) ; et une partie de corps (14) s'étendant depuis le col (12), la partie de corps (14) comprenant une partie d'angle (22, 32) s'étendant depuis le col (12), un bras (16) s'étendant depuis la partie d'angle (22, 32), et deux ou plus de deux parties de retenue (18) s'étendant depuis le bras (16), le col (12) comprenant en outre un congé de raccordement (34) à proximité de la partie d'angle (22, 32), ledit congé de raccordement (34) ayant un plus grand diamètre que le col (12) et/ou le col (12) comprenant en outre des nervures alternées (40) s'étendant radialement vers l'intérieur depuis une paroi interne (44) d'une première partie de col (46) et des encoches (20) formant une partie de la paroi interne (44) ;
l'injection d'azote gazeux dans la masse fondue à travers une aiguille d'injection de gaz (310) lorsque la masse fondue commence à se solidifier ;
la poussée de la matière fondue jusqu'aux extrémités de la cavité ;
le refroidissement de la masse fondue ;
la purge de l'azote gazeux ;
l'ouverture du moule ; et
l'éjection de la poignée (10).
